# FASCICULE DE BREVET EUROPEEN

(11) **EP 3 615 828 B1**
(45) Date de publication et mention de la délivrance du brevet: **13.01.2021**
(21) Numéro de dépôt: 18715219.4
(22) Date de dépôt: 21.03.2018
(51) Int. Cl.: F16D 48/06

(54) **PROCÉDÉ DE PROTECTION THERMIQUE D'UN DISPOSITIF D'EMBRAYAGE D'UN VÉHICULE, NOTAMMENT AUTOMOBILE**
VERFAHREN ZUM THERMISCHEN SCHUTZ EINES FAHRZEUGS, INSBESONDERE EINES KRAFTFAHRZEUGS, KUPPLUNGSVORRICHTUNG
METHOD FOR THE THERMAL PROTECTION OF A VEHICLE, NOTABLY MOTOR VEHICLE, CLUTCH DEVICE

(30) Priorité: 26.04.2017 FR 1753613
(43) Date de publication de la demande: 04.03.2020
(73) Titulaire: PSA Automobiles SA, 78300 Poissy (FR)
(72) Inventeur: BALENGHIEN, Olivier, 93390 Clichy sous Bois (FR); PEITL, Amelie, 94800 Villejuif (FR)
(86) Numéro de dépôt international: PCT/FR2018/050685
(87) Numéro de publication internationale: WO 2018/197765

(56) Documents cités:
- WO-A2-2010/007271
- DE-A1-102011 006 166
- DE-A1-102015 208 854
- FR-A1- 2 974 868

## Description

L'invention concerne un procédé de protection thermique d'un dispositif d'embrayage d'un véhicule, notamment automobile.

Le véhicule automobile comprend une boite de vitesses, de type automatique ou pilotée. La boite de vitesses comporte un calculateur de boîte de vitesses apte à piloter le dispositif d'embrayage, ce dernier comprenant un volant solidaire d'un arbre de sortie du moteur thermique et apte à s'accoupler avec un ou des disques d'embrayage solidaires d'un arbre d'entrée de la boite de vitesses. En outre, le véhicule comprend un capteur de mesure de la température régnant à l'intérieur du carter du dispositif d'embrayage et qui est électriquement relié au calculateur de boîte de vitesses contrôlant en continu la température mesurée par le capteur.

De manière connue en soi, lorsque la température à l'intérieur du dispositif d'embrayage dépasse une valeur déterminée, dépendant de la position du capteur et des caractéristiques techniques du dispositif d'embrayage, l'adhérence du disque d'embrayage avec le volant diminue, ce qui provoque non seulement une chute du couple transmis par le dispositif d'embrayage à la boite de vitesses, mais également une usure prématurée et irréversible du disque d'embrayage.

On connait le document de brevet FR-A1-2974868 divulguant le préambule de la revendication 1.

En outre, le document DE 102014019491 décrit que, lorsque la température du dispositif d'embrayage mesurée par le capteur de mesure de température et contrôlée par le calculateur de boîte de vitesses dépasse une valeur seuil, le calculateur de boîte de vitesses envoie au conducteur un signal visuel ou sonore le prévenant que le dispositif d'embrayage est en surchauffe.

Cependant, pour appliquer une telle solution, il est nécessaire soit de prévoir un voyant spécifique supplémentaire sur le tableau de bord, soit de prévoir un dispositif audio pour transmettre le signal sonore. Cette solution engendre donc des difficultés techniques entrainant des coûts supplémentaires. En outre, la présence du conducteur est indispensable pour remédier à ce problème de surchauffe du dispositif d'embrayage.

La présente invention a pour but de pallier les inconvénients ci-dessus de l'art antérieur.

Pour atteindre ce but, l'invention concerne un procédé de protection thermique d'un dispositif d'embrayage d'un véhicule à moteur thermique, notamment automobile, qui est en mode de pilotage automatique pour se garer, le véhicule comprenant une boite de vitesses comportant un calculateur de boîte de vitesses apte à piloter le dispositif d'embrayage et configuré pour estimer en continu la température à l'intérieur du carter du dispositif d'embrayage, ce dernier comprenant un disque d'embrayage solidaire d'un arbre d'entrée de la boîte de vitesses et apte à s'accoupler avec un volant solidaire d'un arbre de sortie du moteur thermique, le procédé étant caractérisé en ce qu'il comprend successivement :
a) Lorsque le calculateur de boîte de vitesses détecte à un instant t₀ une donnée de température estimée dépassant une température critique déterminée enregistrée dans un espace mémoire du calculateur de boîte de vitesses et susceptible de détériorer le disque d'embrayage, une étape d'ouverture de l'embrayage pour stopper la transmission du couple par le dispositif d'embrayage à la boite de vitesses, concomitante à une étape d'actionnement du dispositif de freinage du véhicule pour immobiliser le véhicule ;
b) Lorsque la température estimée repasse sous la température critique, une étape de reprise de la transmission du couple par le dispositif d'embrayage à la boite de vitesses concomitante à une étape de relâchement du dispositif de freinage.

Selon une autre particularité, lorsque le conducteur désactive le mode de pilotage automatique alors que la température estimée dépasse la température critique déterminée, les étapes de reprise de la transmission et de relâchement du dispositif de freinage sont mises en œuvre.

Selon une autre particularité, la température est estimée par l'intermédiaire d'un capteur de température compris dans le véhicule et électriquement relié au calculateur de boîte de vitesses contrôlant en continu la température mesurée par le capteur.

Selon une autre particularité, lorsque le dispositif d'embrayage est de type humide comprenant un fluide hydraulique adapté pour exercer une pression sur le disque d'embrayage de sorte que ce(s) dernier(s) soi(en)t pressé(s), le capteur de température mesure la température du fluide hydraulique.

Selon une autre particularité, pour ouvrir le dispositif d'embrayage, le calculateur de boîte de vitesses fait diminuer la pression exercée par le fluide hydraulique sur le disque d'embrayage jusqu'à ce que ce dernier ne soit plus au contact du volant et/ou des autres disques d'embrayage.

Selon une autre particularité, lorsque le dispositif d'embrayage est de type sec comprenant un actionneur électrique ou hydraulique adapté pour exercer une pression sur le disque d'embrayage de sorte que ce dernier soit pressé contre le volant, le capteur de température mesure la température à l'intérieur du carter du dispositif d'embrayage au voisinage du disque d'embrayage.

Selon une autre particularité, pour ouvrir le dispositif d'embrayage, le calculateur de boîte de vitesses fait varier la position de l'actionneur électrique ou hydraulique pour que ce dernier n'exerce plus de pression sur le disque d'embrayage de sorte que ce dernier ne soit plus au contact du volant et/ou des autres disques d'embrayage.

L'invention concerne également un véhicule automobile comprenant un moteur thermique, une boite de vitesses comportant un calculateur de boîte de vitesses apte à piloter un dispositif d'embrayage du véhicule et configuré pour estimer en continu la température à l'intérieur du carter du dispositif d'embrayage, le dispositif d'embrayage comprenant un volant d'inertie solidaire d'un arbre de sortie du moteur thermique et apte à s'accoupler avec un ou des disques d'embrayage solidaire(s) d'un arbre d'entrée de la boite de vitesses, le calculateur de boîte de vitesses étant apte à mettre en œuvre un procédé de protection thermique du dispositif d'embrayage tel que décrit précédemment.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lequel :
- La figure 1 représente une vue schématique d'un embrayage muni d'un capteur de mesure de température et interposé entre le moteur thermique et la boite de vitesse d'un véhicule ;
- La figure 2 représente un diagramme des étapes successives du procédé de protection thermique du dispositif d'embrayage de la figure 1, selon l'invention.

En référence aux figures, le procédé de protection thermique selon l'invention d'un dispositif d'embrayage 1 d'un véhicule notamment automobile, qui est en mode de pilotage automatique pour se garer, va maintenant être décrit.

Le véhicule comprend un moteur thermique 3 et une boite de vitesses 2 comportant un moyen de commande, par exemple un calculateur comprenant un espace mémoire, apte à piloter le dispositif d'embrayage 1 interposé entre la boite de vitesses 2 et le moteur thermique 3. Le dispositif d'embrayage 1 n'est donc pas piloté par le conducteur du véhicule.

Le dispositif d'embrayage 1 comprend au moins un disque d'embrayage 4 solidaire d'un arbre d'entrée 5 de la boite de vitesses 2. Préférentiellement, le dispositif d'embrayage 1 comprend une pluralité de disques d'embrayage 4 coaxiaux, tous solidaires de l'arbre d'entrée 5 de la boite de vitesses 2. Néanmoins, pour plus de clarté dans la suite de la description, on ne mentionnera qu'un seul disque d'embrayage 4 bien que la description technique qui va suivre puisse s'appliquer à un dispositif d'embrayage 1 comprenant une pluralité de disques d'embrayage 4.

Le dispositif d'embrayage 1 comprend également un volant 6 solidaire d'un arbre de sortie 7 du moteur 3, le disque d'embrayage 4 étant apte à s'accoupler avec le volant 6 pour permettre la transmission du couple moteur à la boite de vitesses 2 par l'intermédiaire du dispositif d'embrayage 1. Le disque d'embrayage 4 et le volant 6 sont disposés à l'intérieur d'un carter 9 du dispositif d'embrayage 1.

En outre, le véhicule comprend un capteur 8 de mesure de la température régnant à l'intérieur du carter 9 du dispositif d'embrayage 1, ce capteur 8 étant électriquement relié au calculateur de boîte de vitesses de la boite de vitesses. Dans une première alternative, le calculateur de boîte de vitesses de la boite de vitesses estime la température régnant à l'intérieur du carter 9 du dispositif d'embrayage 1 en utilisant directement les données de température mesurées par le capteur de température 8. Dans une deuxième alternative, le calculateur de boîte de vitesses estime la température à l'intérieur du carter 9 du dispositif d'embrayage 1 en multipliant les données de température mesurées par le capteur 8 de température par un coefficient dépendant des caractéristiques techniques du dispositif d'embrayage 1 et/ou de la boite de vitesses et de la position du capteur 8.

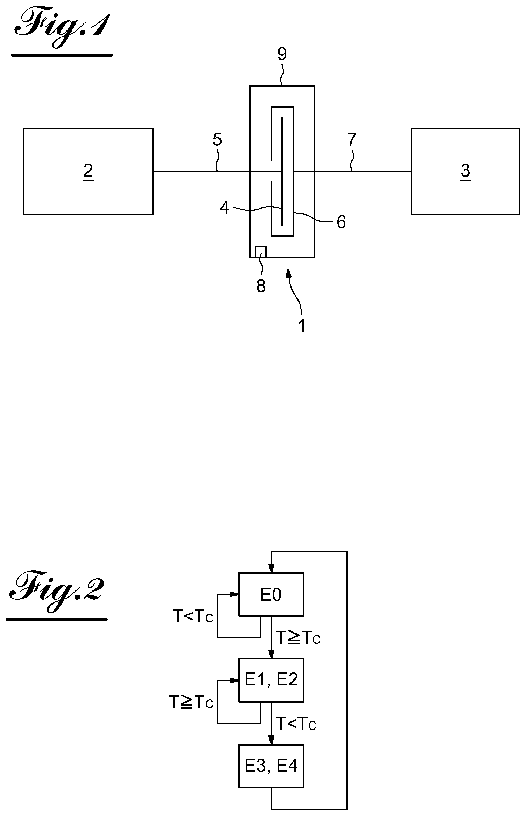

Ainsi, le calculateur de boîte de vitesses contrôle en continu la température mesurée par le capteur 8. Ce contrôle continu est représenté par la boite E0 dans la figure 2. Cette surveillance de la température régnant à l'intérieur du dispositif d'embrayage 1 a pour but de permettre au calculateur de boîte de vitesses de détecter tout dépassement de la température au-delà d'une température critique Tc. En effet, si la température à l'intérieur du carter 9 du dispositif d'embrayage 1 dépasse cette température critique Tc, l'adhérence du disque d'embrayage 4 avec le volant 6 diminue, ce qui provoque non seulement une chute du couple transmis par le dispositif d'embrayage 1 à la boite de vitesses 2, mais également une usure prématurée et irréversible du ou des disque(s) d'embrayage(s) 4. Cette température critique Tc est inférieure à la température de dégradation du ou des disque(s) d'embrayage(s). Préférentiellement, la température critique Tc est choisie inférieure de cinq à quinze pour cents de la température de dégradation du ou des disque(s) d'embrayage(s).

Lorsque le véhicule est en mode de pilotage automatique pour se garer seul, le dispositif d'embrayage 1 est constamment en patinage pour éviter que la vitesse du véhicule en train de se garer dépasse quelques kilomètres par heure, typiquement cinq kilomètres par heure. Ce patinage constant se caractérise par un contact glissant constant entre le ou les disques d'embrayage 4 et le volant 6. Ce contact glissant induit une friction entre le ou les disques 4 et le volant 6 qui provoque alors un échauffement des disques d'embrayage 4 et du volant 6, qui peut aller jusqu'à dépasser la température critique Tc.

La valeur de cette température critique Tc est enregistrée dans l'espace mémoire du moyen de commande, et sa détermination dépend des caractéristiques techniques du dispositif d'embrayage 1, en particulier le diamètre, l'épaisseur et le type de matériau du ou des disque(s) d'embrayage 4, mais également la température de l'huile du moteur et du fluide dans lequel baigne les disques d'embrayage de la boite de vitesses et la position du capteur de température 8. En outre, la position du capteur 8 de mesure de température et la détermination de la température critique Tc dépendent également du type de dispositif d'embrayage 1, selon que ce dernier soit du type humide ou du type sec.

Dans un premier mode de réalisation, lorsque le dispositif d'embrayage 1 est du type sec, il comprend un actionneur électrique ou hydraulique qui est adapté pour exercer une pression sur le disque d'embrayage 4, de sorte que ce dernier soit pressé contre le volant 6 ou pressé entre eux. Le capteur 8 de température est disposé dans le carter 9 du dispositif d'embrayage 1, au plus près du disque d'embrayage 4 pour détecter au mieux le flux de chaleur provenant de la friction du (ou des) disque(s) d'embrayage 4.

Dans un mode de réalisation préféré, le dispositif d'embrayage 1 est du type humide, et ce dernier baigne dans un fluide hydraulique adapté pour exercer une pression sur le ou les disque(s) d'embrayage(s) 4, de sorte que ce ou ces dernier(s) soi(en)t pressé(s) contre le volant 6 ou entre eux pour les systèmes hydrauliques multi disques. Préférentiellement, ce fluide hydraulique est le fluide provenant de la boite de vitesses 2, et est de manière avantageuse de l'huile. Le capteur 8 de mesure de température est donc adapté pour mesurer la température de l'huile, et peut être disposé par exemple dans le carter 9 du dispositif d'embrayage 1, comme représenté sur la figure 1, mais également ailleurs dans le circuit assurant la circulation de l'huile entre le dispositif d'embrayage 1 et la boite de vitesses 2.

En outre, pour un dispositif d'embrayage 1 de type humide, la détermination de la température critique Tc dépend d'autres paramètres, en particulier de la capacité de la boite de vitesses 2 à refroidir l'huile circulant entre le dispositif d'embrayage 1 et la boite de vitesses 2, et des caractéristiques de cette huile.

Selon l'invention, le calculateur de boîte de vitesses est adapté pour mettre en œuvre un procédé de protection thermique du dispositif d'embrayage 1 du véhicule, dont les étapes successives vont être décrites.

Lorsque le calculateur de boîte de vitesses détecte à un instant t₀ une donnée de température mesurée dépassant la température critique déterminée Tc, le calculateur de boîte de vitesses pilote l'ouverture E1 du dispositif d'embrayage 1 pour stopper la transmission du couple depuis le dispositif d'embrayage vers la boite de vitesses 3. Les disques d'embrayage 4 n'étant plus en contact entre eux ni au contact du volant 6, cela permet une diminution de la température dans le carter du dispositif d'embrayage 1. De manière concomitante, puisque le véhicule est désormais en roues libres, le calculateur de boîte de vitesses pilote l'actionnement E2 du dispositif de freinage du véhicule pour immobiliser ce dernier.

Afin d'ouvrir le dispositif d'embrayage 1 lorsque ce dernier est de type humide, le calculateur de boîte de vitesses fait diminuer la pression exercée par le fluide hydraulique sur le disque d'embrayage 4, jusqu'à ce que ce dernier ne soit plus au contact du volant 6 et/ou des autres disques d'embrayage 4.

Alternativement, afin d'ouvrir le dispositif d'embrayage 1 lorsque ce dernier est de type sec, le calculateur de boîte de vitesses fait varier la position de l'actionneur électrique ou hydraulique pour que ce dernier n'exerce plus de pression sur le disque d'embrayage 4 de sorte que ce disque d'embrayage 4 ne soit plus au contact du volant 6 et/ou des autres disques d'embrayage 4.

Lorsque la température mesurée par le capteur 8 repasse sous la température critique Tc, le calculateur de boîte de vitesses pilote le dispositif d'embrayage 1 de manière à remettre E3 en contact le disque d'embrayage 4 avec le volant 6 et/ou les autres disques d'embrayage 4. Ainsi, le dispositif d'embrayage 1 est de nouveau en mesure de fournir un couple à la boite de vitesses 3. Concomitamment à la commande E3 de reprise de la transmission du couple par le dispositif d'embrayage 1 à la boite de vitesses 3, le calculateur de boîte de vitesses pilote le relâchement E4 du dispositif de freinage pour permettre le déplacement du véhicule.

En outre, le véhicule étant en mode de pilotage automatique et le calculateur de boîte de vitesses mettant en œuvre les étapes E1 et E2 du procédé consistant à ouvrir le dispositif d'embrayage 1 et actionner le dispositif de freinage, lorsque le conducteur désactive le mode de pilotage automatique alors que la température estimée dépasse la température critique Tc, les étapes E3 de reprise de la transmission et E4 de relâchement du dispositif de freinage sont mises en oeuvre pour permettre au conducteur de reprendre le contrôle du véhicule, par exemple pour débloquer la circulation.

Ainsi, la présente invention permet, lorsque le véhicule est en mode de pilotage automatique pour se garer, d'arrêter le véhicule lorsque le dispositif d'embrayage 1 est en surchauffe et risque de fait de se détériorer, sans nécessiter l'intervention du conducteur à moins que ce dernier ne coupe le mode de pilotage automatique.

## Revendications

1. Procédé de protection thermique d'un dispositif d'embrayage (1) d'un véhicule à moteur thermique (3), notamment automobile, qui est en mode de pilotage automatique pour se garer, le véhicule comprenant une boite de vitesses (2) comportant un calculateur de boîte de vitesses apte à piloter le dispositif d'embrayage (1) et configuré pour estimer en continu (E0) la température à l'intérieur du carter (9) du dispositif d'embrayage (1), ce dernier comprenant un disque d'embrayage (4) solidaire d'un arbre d'entrée (5) de la boîte de vitesses (2) et apte à s'accoupler avec un volant (6) du dispositif d'embrayage (1) solidaire d'un arbre de sortie (7) du moteur thermique (3), le procédé étant **caractérisé en ce qu'**il comprend successivement :
a) Lorsque le calculateur de boîte de vitesses détecte à un instant t₀ une donnée de température estimée dépassant une température critique déterminée (Tc) enregistrée dans un espace mémoire du calculateur de boîte de vitesses et susceptible de détériorer le disque d'embrayage (4), une étape (E1) d'ouverture du dispositif d'embrayage (1) pour stopper la transmission du couple par le dispositif d'embrayage (1) à la boite de vitesses (2), concomitante à une étape (E2) d'actionnement du dispositif de freinage du véhicule pour immobiliser le véhicule ;
b) Lorsque la température estimée repasse sous la température critique (Tc), une étape (E3) de reprise de la transmission du couple par le dispositif d'embrayage (1) à la boite de vitesses (2) concomitante à une étape (E4) de relâchement du dispositif de freinage.

2. Procédé selon la revendication 1, **caractérisé en ce que**, lorsque le conducteur désactive le mode de pilotage automatique alors que la température estimée dépasse la température critique déterminée (Tc), les étapes (E3) de reprise de la transmission et (E4) de relâchement du dispositif de freinage sont mises en oeuvre.

3. Procédé selon la revendication 2, **caractérisé en ce que** la température est estimée par l'intermédiaire d'un capteur (8) de température compris dans le véhicule et électriquement relié au calculateur de boîte de vitesses contrôlant (E0) en continu la température mesurée par le capteur (8).

4. Procédé selon la revendication 3, **caractérisé en ce que**, lorsque le dispositif d'embrayage (1) est de type humide comprenant un fluide hydraulique adapté pour exercer une pression sur le disque d'embrayage (4) de sorte que ce(s) dernier(s) soi(en)t pressé(s), le capteur (8) de température mesure la température du fluide hydraulique.

5. Procédé selon la revendication 4, **caractérisé en ce que**, pour ouvrir le dispositif d'embrayage, le calculateur de boîte de vitesses fait diminuer la pression exercée par le fluide hydraulique sur le disque d'embrayage (4) jusqu'à ce que ce dernier ne soit plus au contact du volant (6) et/ou des autres disques d'embrayage (4).

6. Procédé selon la revendication 3, **caractérisé en ce que**, lorsque le dispositif d'embrayage (1) est de type sec comprenant un actionneur électrique ou hydraulique adapté pour exercer une pression sur le disque d'embrayage (4) de sorte que ce dernier soit pressé contre le volant (6), le capteur (8) de température mesure la température à l'intérieur du carter (9) du dispositif d'embrayage (1) au voisinage du disque d'embrayage (4).

7. Procédé selon la revendication 6, **caractérisé en ce que**, pour ouvrir le dispositif d'embrayage, le calculateur de boîte de vitesses fait varier la position de l'actionneur électrique ou hydraulique pour que ce dernier n'exerce plus de pression sur le disque d'embrayage (4) de sorte que ce dernier ne soit plus au contact du volant (6) et/ou des autres disques d'embrayage (4).

8. Véhicule automobile comprenant un moteur thermique (2), une boite de vitesses (2) comportant un calculateur de boîte de vitesses apte à piloter un dispositif d'embrayage (1) du véhicule et configuré pour estimer en continu la température à l'intérieur du carter (9) du dispositif d'embrayage, le dispositif d'embrayage (1) comprenant un volant d'embrayage (6) solidaire d'un arbre de sortie (7) du moteur thermique (3) et apte à s'accoupler avec un ou des disques d'embrayage (4) solidaire(s) d'un arbre d'entrée (5) de la boite de vitesses (2), le calculateur de boîte de vitesses mettant en oeuvre un procédé de protection thermique du dispositif d'embrayage (1) selon l'une quelconque des revendications 1 à 7.

## Patentansprüche

1. Ein Verfahren zum thermischen Schutz einer Gerätekupplung (1) ein Fahrzeugs mit einem Verbrennungsmotor (3), insbesondere einen Motor, welches in Modus der automatischen Lenken parken, um das Fahrzeug umfassend ein Getriebe (2) umfassend einen Getriebecomputer , der die Kupplungsvorrichtung (1) steuern kann und konfiguriert ist, um die Temperatur innerhalb des Gehäuses (9) der Kupplungsvorrichtung (1),
letztere , kontinuierlich zu schätzen (E0) einschließlich einer Kupplungsscheibe (4) integral mit einer Eingangswelle (5) des Getriebes (2) und der Lage der Kupplung mit einem Schwungrad (6) der Kupplungseinrichtung (1) integral mit einer Ausgangswelle (7) der Wärmekraftmaschine (3), wobei das Verfahren **dadurch gekennzeichnet ist, dass** es nacheinander umfasst:
a) Wenn die Getriebecomputer zu einem Zeitpunkt t₀ eine Temperaturdaten abgeschätzt eine kritische Temperatur übersteigt bestimmt (Tc) registriert e in einem Speicherraum des Getriebe Computer und wahrscheinlich die Kupplungsscheibe nicht zu beschädigen (4) einen Schritt (E1) zum Öffnen der Kupplungsvorrichtung (1), um die Übertragung des Drehmoments durch
die Kupplungsvorrichtung (1) auf das Getriebe (2) zu stoppen , gleichzeitig mit einer Stufe (E2) Betätigen der Fahrzeugbremsvorrichtung zum Immobilisieren des Fahrzeugs ;
b) Wenn die geschätzte Temperatur unter die kritische Temperatur (Tc) fällt, ein Schritt (E3) zur Wiederaufnahme der Drehmomentübertragung durch die Kupplungsvorrichtung (1) auf das Getriebe (2), der mit einer Stufe (E4) einhergeht) Lösen der Bremsvorrichtung.

2. Verfahren nach Anspruch 1, **dadurch gekennzeichnet, dass**, wenn der Fahrer den automatischen Pilotierungsmodus deaktiviert, während die geschätzte Temperatur die bestimmte kritische Temperatur (Tc) überschreitet, die Schritte (E3) zur Wiederaufnahme des Getriebes und (E4) Freigabe der Bremsvorrichtung sind implementiert.

3. Verfahren nach Anspruch 2, **dadurch gekennzeichnet, dass** die Temperatur mittels eines im Fahrzeug enthaltenen Temperatursensors (8) geschätzt und elektrisch mit dem Getriebecomputer verbunden ist, der die Temperatur kontinuierlich steuert (E0) gemessen vom Sensor (8).

4. Verfahren nach dem Anspruch 3, **dadurch gekennzeichnet, dass**, wenn die Kupplungseinrichtung (1) ist vom Nasstyp enthält eine ant Hydraulikflüssigkeit zum Ausüben einen Drucks angepasst auf der Scheibe Kupplung (4), so dass es (e) letzte (n) selbst (in) t gedrückt (e), der
Sensor (8) Temperatur gemessen die Hydraulikfluid - Temperatur.

5. Verfahren nach Anspruch 4, **dadurch gekennzeichnet**, die Kupplungseinrichtung zu öffnen, wird das Getriebe Computer nehmen den Druck durch die Hydraulikflüssigkeit auf der Kupplungsscheibe ausgeübte (4), bis Letzterer hat keinen Kontakt mehr mit dem Schwungrad (6) und / oder den anderen Kupplungsscheiben (4).

6. Verfahren nach dem Anspruch 3, **dadurch gekennzeichnet, dass**, wenn die Kupplungseinrichtung (1) ist vom Trockentyp gehört ant ein elektrischer oder hydraulischer Aktuator einen Druck auszuüben, angepasst auf der Scheibe Kupplung (4), so dass Letzterer wird gegen das
Schwungrad (6) gedrückt, der Temperatursensor (8) misst die Temperatur im Gehäuse (9) der Kupplungsvorrichtung (1) in der Nähe der Kupplungsscheibe (4).

7. Verfahren nach Anspruch 6, **dadurch gekennzeichnet, dass** der Getriebecomputer zum Öffnen der Kupplungsvorrichtung die Position des elektrischen oder hydraulischen Aktuators so variiert, dass dieser keinen Druck mehr auf das ausübt Kupplungsscheibe (4), so dass diese nicht mehr mit dem Schwungrad (6) und / oder den anderen Kupplungsscheiben (4) in Kontakt steht.

8. Kraftfahrzeug mit einer Wärmekraftmaschine (2), einem Getriebe (2) mit einem Getriebecomputer , der eine Kupplungsvorrichtung (1) des Fahrzeugs steuern kann und konfiguriert ist, um die Temperatur an der kontinuierlich zu schätzen im Innern des Gehäuse (9) der Kupplungsvorrichtung , die Kupplungsvorrichtung (1) umfassend eine Kupplungs Schwungrad (6), die fest mit einer Abtriebswelle (7) der Wärmekraftmaschine (3) und geeignet für paaren mit einem oder mehreren Kupplungsscheiben (4),
die fest (s) einer Eingangswelle (5) des Getriebes (2), den Getriebecomputer, der ein Wärmeschutzverfahren für die Kupplungsvorrichtung (1) gemäß einem der Ansprüche 1 bis 7 implementiert.

## Claims

1. A method for thermal protection of a device clutch (1) of a vehicle with a heat engine (3), in particular a motor, which is in mode automatic steering to park, the vehicle comprising a gearbox (2) comprising a gearbox computer capable of controlling the clutch device (1) and configured to continuously estimate (E0) the temperature inside the housing (9) of the clutch device (1), the latter including a clutch disc (4) integral with an input shaft (5) of the gearbox (2) and capable of coupling with a flywheel (6) of the clutch device (1) integral with an output shaft (7) of the heat engine (3), the method being **characterized in that** it comprises successively :
a) When the gearbox ECU detects at a time t₀ a temperature data estimated exceeding a critical
temperature determined (Tc) registered e in a memory space of the gearbox computer and likely to damage the clutch disc (4), a step (E1) of opening the clutch device (1) to stop the transmission of torque by the clutch device (1) to the gearbox (2), concomitant with a step (E2) actuating the vehicle braking device to immobilize the vehicle ;
b) When the estimated temperature drops below the critical temperature (Tc), a step (E3) of resumption of the transmission of torque by the clutch device (1) to the gearbox (2) concomitant with a step (E4) release of the braking device.

2. Method according to claim 1, **characterized in that**, when the driver deactivates the automatic piloting mode while the estimated temperature exceeds the determined critical temperature (Tc), the steps (E3) of resuming the transmission and (E4) release of the braking device are implemented.

3. Method according to claim 2, **characterized in that** the temperature is estimated by means of a temperature sensor (8) included in the vehicle and electrically connected to the gearbox computer controlling (E0) continuously the temperature measured by the sensor (8).

4. Method according to claim 3, **characterized in that**, when the clutch device (1) is wet-type include an ant hydraulic fluid adapted for exerting a pressure on the disc clutch (4) so that it (s) last (s) itself (in) t pressed (s), the sensor (8) temperature measured e the hydraulic fluid temperature.

5. Method according to claim 4, **characterized in that**, to open the clutch device, the gearbox computer decreases the pressure exerted by the hydraulic fluid on the clutch disc (4) until the latter is no longer in contact with the flywheel (6) and / or the other clutch discs (4).

6. Method according to claim 3, **characterized in that**, when the clutch device (1) is dry-type include an ant an electric or hydraulic actuator adapted to exert a pressure on the disc clutch (4) so that the latter is pressed against the flywheel (6), the temperature sensor (8) measures the temperature inside the housing (9) of the clutch device (1) in the vicinity of the clutch disc (4).

7. Method according to claim 6, **characterized in that**, to open the clutch device, the gearbox computer varies the position of the electric or hydraulic actuator so that the latter no longer exerts pressure on the clutch disc (4) so that the latter is no longer in contact with the flywheel (6) and / or the other clutch discs (4).

8. Motor vehicle comprising a heat engine (2), a gearbox (2) comprising a gearbox computer capable of controlling a clutch device (1) of the vehicle and configured to continuously estimate the temperature at the inside the housing (9) of the clutch device , the clutch device (1) comprising a clutch flywheel (6) integral with an output shaft (7) of the heat engine (3) and suitable for s' mate with one or more clutch discs (4) integral (s) of an input shaft (5) of the gearbox (2), the transmission ECU putting out a thermal protection method of Clutch device (1) according to any one of claims 1 to 7.
